# EUROPEAN PATENT APPLICATION

(11) **EP 1 847 407 A2**
(43) Date of publication of application: **24.10.2007**
(21) Application number: 06015923.3
(22) Date of filing: 31.07.2006
(51) Int. Cl.: B60B 1/04, B60B 9/26

(54) **Wheel frame assembly**

(30) Priority: 20.04.2006 US 407574
(71) Applicant: Luo, Chin-Kuang, Taichung City (TW)
(72) Inventor: Luo, Chin-Kuang, Taichung City (TW)
(74) Representative: Becker Kurig Straus

(57) **Abstract**

A wheel frame assembly includes a hub (2), a rim (3) surrounding the hub (2), and a plurality of spokes (4) . Each of the spokes (4) extends between the hub (2) and the rim (3), and has at least one bent section (43) that is compressible and deformable elastically. Therefore, sufficient elastic deformability and shock absorbability can be provided by the wheel frame assembly.

## Description

The invention relates to a wheel frame assembly, more particularly to a wheel frame assembly including a plurality of spokes which are compressible and deformable elastically.

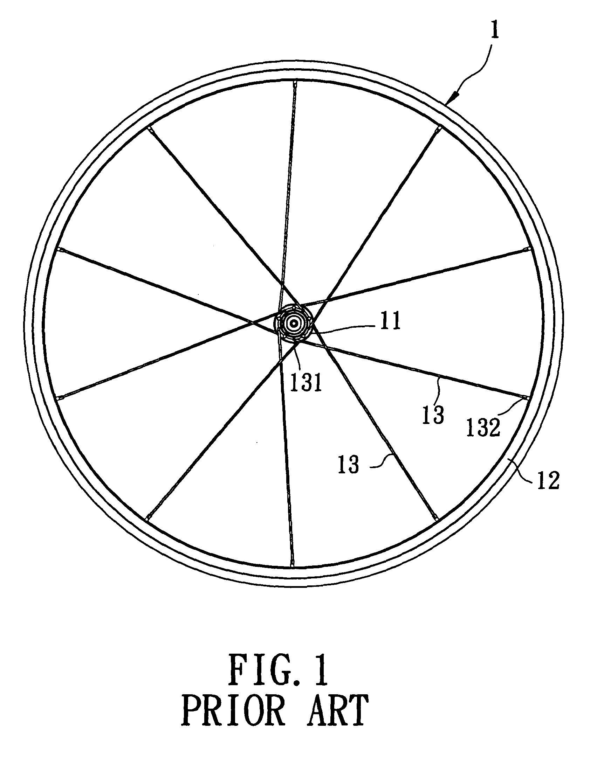

Referring to Figure 1, a conventional wheel frame assembly 1 includes a hub 11, a rim 12 surrounding the hub 11, and a plurality of spokes 13, each of which extends linearly between the hub 11 and the rim 12, and each of which has two opposite ends 131,132 connected to the hub 11 and the rim 12, respectively.

When the wheel frame assembly 1 is subject to stress, the stress may concentrate at the ends 131,132 of the spokes 13 due to the linearity of the spokes 13 such that the spokes 13 are liable to break at the ends 131, 132 thereof. Furthermore, since the elastic deformability of the conventional wheel frame assembly 1 is insufficient, an additional shock absorber is required to reduce the shock of the wheel frame assembly 1 during use.

Therefore, the object of the present invention is to provide a wheel frame assembly having sufficient elastic deformability and shock absorbability.

The wheel frame assembly according to this invention includes a hub, a rim surrounding the hub, and a plurality of spokes. Each of the spokes extends between the hub and the rim, and has at least one bent section that is compressible and deformable elastically.

Other features and advantages of the present invention will become apparent in the following detailed description of the preferred embodiments with reference to the accompanying drawings, of which:
Figure 1 is a schematic view of a conventional wheel frame assembly;
Figure 2 is a schematic view of the first preferred embodiment of a wheel frame assembly according to this invention;
Figure 3 is a schematic view of the first preferred embodiment under compression;
Figure 4 is a schematic view of the second preferred embodiment of a wheel frame assembly according to this invention; and
Figure 5 is a schematic view of the third preferred embodiment of a wheel frame assembly according to this invention.

Before the present invention is described in greater detail, it should be noted that like elements are denoted by the same reference numerals throughout the disclosure.

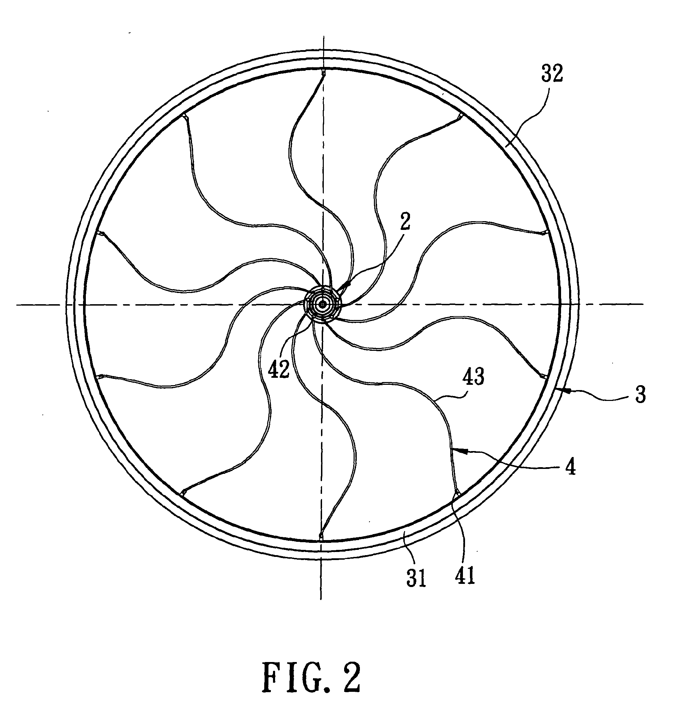

Referring to Figure 2, the first preferred embodiment of the wheel frame assembly according to this invention includes a hub 2, a rim 3 surrounding the hub 2, and apluralityof spokes 4. The rim3 includes a lowerportion 31 and an upper portion 32. Each of the spokes 4 extends between the hub 2 and the rim 3, and has two opposite ends 41,42 connected to the rim 3 and the hub 2, respectively, and a bent section 43 that is compressible and deformable elastically. The spokes 4 are made of steel. In this embodiment, the bent section 43 of each of the spokes 4 has a substantially S-shape.

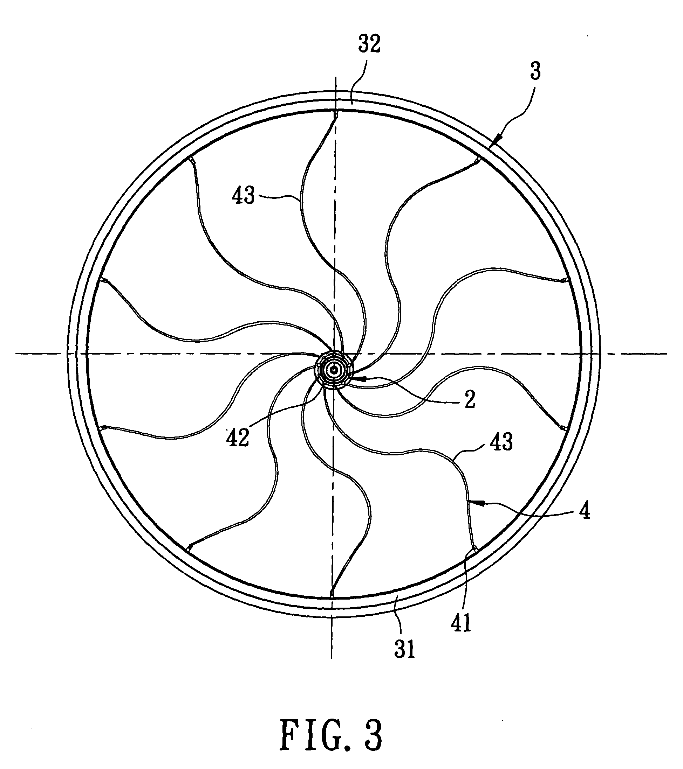

Referring to Figure 3, when the wheel frame assembly is under compression (i.e., a state of use), the bent sections 43 of the spokes 4 extending between the lower portion 31 of the rim 3 and the hub 2 are compressed, whereas the bent sections 43 of the spokes 4 extending between the upper portion 32 of the rim and the hub 2 are stretched. The hub 2 is shifted accordingly so as to absorb shock energy. Therefore, the deformability of the spokes 4 is increased, and the wheel frame assembly has a superior shock-absorbing effect over the prior art.

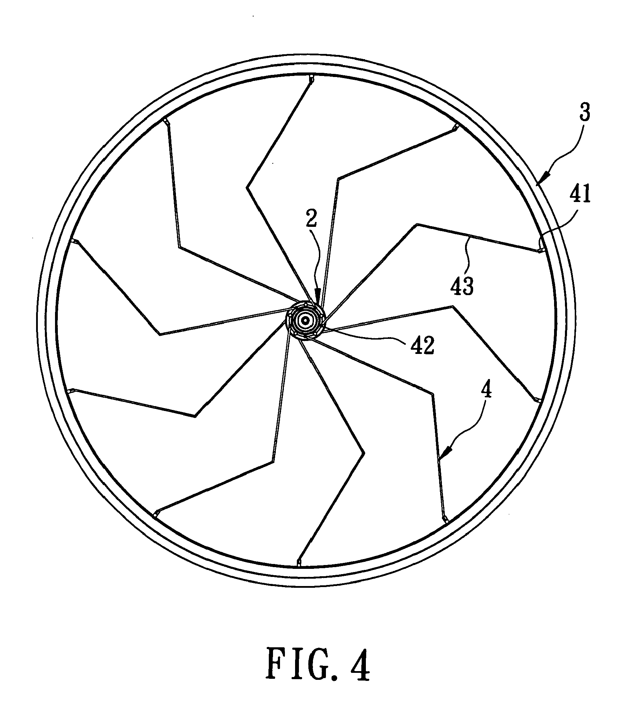

Referring to Figure 4, the second preferred embodiment of the wheel frame assembly according to this invention is shown to be similar to the first preferred embodiment, except that the bent section 43 of each of the spokes 4 in this embodiment has a substantially V-shape.

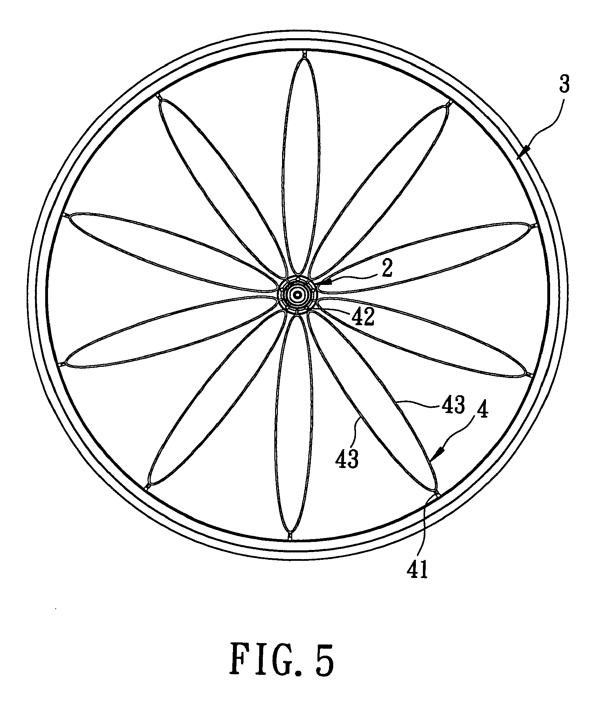

Referring to Figure 5, the third preferred embodiment of the wheel frame assembly according to this invention is shown to be similar to the first preferred embodiment, except that each of the spokes 4 in this embodiment is formed as an elongated loop having a pair of the bent sections 43 that bow respectively in two opposite outward directions.

## Claims

1. A wheel frame assembly, **characterized by**:
a hub (2);
a rim (3) surrounding said hub (2); and
a plurality of spokes (4) each extending between said hub (2) and said rim (3), and having at least one bent section (43) that is compressible and deformable elastically.

2. The wheel frame assembly as claimed in Claim 1, **characterized in that** said bent section (43) has a substantially S-shape.

3. The wheel frame assembly as claimed in Claim 1, **characterized in that** said bent section (43) has a substantially V-shape.

4. The wheel frame assembly as claimed in Claim 1, **characterized in that** each of said spokes (4) is formed as an elongated loop having a pair of said bent sections (43) that bow respectively in two opposite outward directions.

5. The wheel frame assembly as claimed in Claim 1, **characterized in that** each of said spokes (4) is made of steel.
